# EUROPÄISCHE PATENTSCHRIFT

(11) **EP 1 771 932 B1**
(45) Veröffentlichungstag und Bekanntmachung des Hinweises auf die Patenterteilung: **18.12.2019**
(21) Anmeldenummer: 05770191.4
(22) Anmeldetag: 19.07.2005
(51) Int. Cl.: H02K 15/04, H02K 3/28

(54) **STATOR EINER ELEKTRISCHEN MASCHINE MIT EINER WELLENWICKLUNG**
STATOR OF AN ELECTRIC MACHINE COMPRISING A WAVE WINDING
STATOR D'UNE MACHINE ELECTRIQUE COMPRENANT UN ENROULEMENT ONDULE

(30) Priorität: 20.07.2004 DE 102004035084
(43) Veröffentlichungstag der Anmeldung: 11.04.2007
(73) Patentinhaber: ELMOTEC STATOMAT Holding GmbH, 61184 Karben (DE)
(72) Erfinder: SADIKU, Sadik, 63543 Neuberg (DE); WITWER, Keith, Alan, Fort Wayne, Indiana 46804 (US)
(74) Vertreter: Patentanwälte Olbricht Buchhold Keulertz
(86) Internationale Anmeldenummer: PCT/EP2005/007847
(87) Internationale Veröffentlichungsnummer: WO 2006/008134

(56) Entgegenhaltungen:
- EP-A- 1 469 579
- EP-A- 1 494 337
- AT-B- 323 837
- DE-A1- 10 302 740
- DE-A1- 10 328 955
- JP-A- 2000 139 051
- US-A- 4 523 447
- PATENT ABSTRACTS OF JAPAN Bd. 2003, Nr. 12, 5. Dezember 2003 (2003-12-05) -& JP 2004 064829 A (SANKO KIKI CO LTD), 26. Februar 2004 (2004-02-26)
- PATENT ABSTRACTS OF JAPAN Bd. 008, Nr. 226 (E-272), 17. Oktober 1984 (1984-10-17) -& JP 59 106861 A (YASUKAWA DENKI SEISAKUSHO KK), 20. Juni 1984 (1984-06-20)
- PATENT ABSTRACTS OF JAPAN Bd. 009, Nr. 004 (E-288), 10. Januar 1985 (1985-01-10) -& JP 59 153441 A (HITACHI SEISAKUSHO KK), 1. September 1984 (1984-09-01)
- PATENT ABSTRACTS OF JAPAN Bd. 2000, Nr. 08, 6. Oktober 2000 (2000-10-06) -& JP 2000 139051 A (DENSO CORP), 16. Mai 2000 (2000-05-16)
- PATENT ABSTRACTS OF JAPAN Bd. 008, Nr. 167 (E-258), 2. August 1984 (1984-08-02) -& JP 59 063956 A (MATSUSHITA DENKI SANGYO KK), 11. April 1984 (1984-04-11)
- PATENT ABSTRACTS OF JAPAN Bd. 1998, Nr. 13, 30. November 1998 (1998-11-30) -& JP 10 229664 A (TOSHIBA CORP), 25. August 1998 (1998-08-25)
- PATENT ABSTRACTS OF JAPAN Bd. 1999, Nr. 14, 22. Dezember 1999 (1999-12-22) -& JP 11 252875 A (NIKON CORP), 17. September 1999 (1999-09-17)

## Beschreibung

Die Erfindung betrifft Statoren elektrischer Maschinen.

Aus der JP 2004/064829A ist eine Wickelvorrichtung bekannt, bei welcher die Windungen auf einen Wicklungsrahmen aufgewickelt werden. Die EP 1 469 579 A beschreibt das Aufwickeln eines Wicklungsdrahtes auf eine hexagonale Schablone mit beweglichen Elementen. Die EP 1 246 341 A2 zeigt ein Verfahren zur Herstellung einer Spulenwicklung, bei welchem mehrere Spulenwindungen gleichzeitig geformt werden.

Die DE 103 28 956 A1 zeigt einen Spulenaufnehmer zum Sammeln mehrerer Wicklungen, die dann in radial außen offene Nuten eines rotorähnlichen Übertragungswerkzeuges überführt werden.

Weiterer Stand der Technik betreffend Verfahren zur Herstellung einer Spulenwicklung sowie hierzu dienende Vorrichtungen und entsprechend hergestellte Statoren oder Rotoren sind aus der JP 59/106861A, der AT 323837B, der JP 59/153441A, der JP 2000/139051A, der JP 59/063956 A, der JP 10/229664A, der JP 11/252875A, der US 4,523,447 A, der DE 103 02 740 A1 sowie der EP 1494337 A bekannt.

Die bisher durch Aufwickeln auf einer Schablone gebildeten Schleifenwicklungen haben, unabhängig davon, ob sie im Stator konzentrische oder am Umfang überlappende Drahtwindungen oder Spulen bilden, den Nachteil, daß im fertigen Stator die Wickelköpfe verhältnismäßig voluminös sind, insbesondere in radialer Richtung eine verhältnismäßig große Dicke haben.

Deshalb liegt der Erfindung die Aufgabe zugrunde, einenoder Stator für eine bestimmte Anzahl von Drahtquerschnitten im Querschnitt einer Statornut zu schaffen, der einen in radialer Richtung schmalen Aufbau der Wickelköpfe ergibt.

Erfindungsgemäß wird einen neuer Stator mit radial innen offenen Stator- bzw. Rotornuten mit den Merkmalen des Anspruches 1 zur Verfügung gestellt.
Die Wicklung ist vorzugsweise als verteilte Wicklung ausgebildet, deren beide Hälften vorzugsweise ohne Drahtunterbrechung miteinander verbunden sind. Die Nuten des Stators haben im Querschnitt vorzugsweise eine asymmetrische Form, die zwei Reihen von Drähten angepaßt ist, die engstens auf Lücke nebeneinander liegen.

Nachstehend werden einige Ausführungsbeispiele der Erfindung anhand der Zeichnung näher erläutert. Es zeigen:
Fig. 1 eine schematische Darstellung einer auf einer drehbaren Schablone erzeugten, flach ausgebreiteten Statorwicklung;
Fig. 2 eine gleichartige Statorwicklung, die zusammen mit der Wicklung nach Fig. 1, aber am Umfang des Stators versetzt angeordnet, eine verteilte, nicht erfindungsgemäße Wicklung bilden kann;
Fig. 3 eine Draufsicht auf die überlagerten, nicht erfindungsgemäßen Wicklungen nach Fig. 1 und 2;
Fig. 4 eine Draufsicht auf das linke Ende der überlagerten, nicht erfindungsgemäßen Wicklungen gemäß Fig. 3 in größerem Maßstab;
Fig. 5A-C vollständige Ansichten der in Fig. 1 bis 3 nur zur Hälfte gezeigten, nicht erfindungsgemäßen Wicklungen;
Fig. 6A-C eine schematische Darstellung eines Verfahrens zur Erzeugung einer einzigen verteilten Wicklung durch Faltung;
Fig. 7 eine vereinfachte Seitenansicht einer Schablone und eines Drahtführers zur Erzeugung von Wicklungen der in Fig. 1 bis 6 gezeigten Art;
Fig. 8A-E Stirnansichten der Wickelvorrichtung nach Fig. 7 in verschiedenen Phasen eines Wickelvorgangs;
Fig. 9 eine Stirnansicht in größerem Maßstab der einen Teil der Wickelvorrichtung nach Fig. 7 und 8A-E bildenden Wickelschablone;
Fig. 10A-I eine vereinfachte Darstellung verschiedener Phasen der Entstehung einer Wicklung gemäß Fig. 1 bis 4 auf einer Wickelvorrichtung nach Fig. 7 und 8A-E;
Fig. 11 einen Querschnitt durch eine Statornut, die gefüllt ist mit den Drähten von zwei verteilten Wellenwicklungen gemäß Fig. 6.

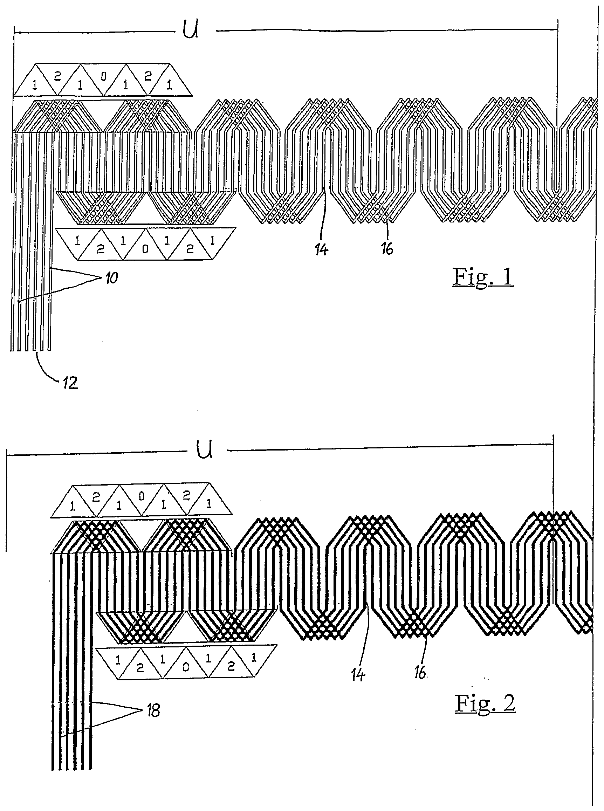

Fig. 1 zeigt eine aus sechs parallelen Drähten 10 nach dem anschließend beschriebenen Verfahren hergestellte Wicklung, im Beispielsfall für einen Stator mit 72 gleichmäßig am Umfang verteilten, radial innen offenen Nuten. Die Wicklung gemäß Fig. 1 ist auf einer leistenförmig flachen Schablone gewickelt worden und dann im zusammengedrückten, flach ausgebreiteten Zustand gezeigt. Der Anfang der Wicklung ist mit 12 bezeichnet. Durch das Wickeln auf der leistenförmigen Schablone sind zunächst aus den sechs Drähten 10 in dem dargestellten ersten Abschnitt U der Wicklung 72 mit gleichem Zwischenabstand parallel nebeneinander liegende, gerade Drahtabschnitte, hier als Stege 14 bezeichnet, geformt worden, die in einem späteren Verfahrensschritt in die 72 Nuten des Stators eingeschoben werden. Jeder Steg 14 geht an seinem oberen und unteren Ende in einen giebelförmigen Wickelkopf 16 über, rechts und andererseits nach links, jedenfalls an beiden Enden eines Steges nach entgegengesetzten Seiten abgewinkelt ist.

An den giebelförmigen Wickelköpfen 16 kreuzen sich die Drähte 10. Man erkennt, daß alle Kreuzungspunkte in der Höhe und Breite versetzt zueinander liegen. Außerdem läßt Fig. 1 erkennen, jeweils welcher Teil eines Wickelkopfes 16 über oder unter einem oder mehreren Wickelköpfen der anderen Drähte 10 liegt. Daher läßt sich der Fig. 1 auch entnehmen, daß, bei Blickrichtung von rechts nach links, die sechs Drähte 10 parallel nebeneinander im Uhrzeigersinn schraubenförmig um die leistenförmige Schablone gewickelt worden sind, wobei die erzeugten Schraubenwendeln nur im Bereich der Wickelköpfe 16 eine Steigung haben.

Über ihre Länge betrachtet, bieten die Wickelköpfe 16 nicht dasselbe Bild gleichmäßiger Verteilung wie die Stege 14. Wie in Fig. 1 gezeigt, bilden die Wickelköpfe 16 eine wiederkehrende Folge von vier dreieckigen Abschnitten, in denen die Drähte 10 erst einlagig, dann im Kreuzungsbereich zweilagig, dann wieder nur einlagig liegen, woran sich ein freier dreieckiger Bereich anschließt, bevor sich die Folge wiederholt. Im Bereich der Kreuzungspunkte ergibt sich ein nur zweilagiger Aufbau der Drähte, weil alle Kreuzungspunkte an verschiedenen Stellen liegen.

Betrachtet man die sechs parallelen Drähte 10 als eine Gruppe, so ist anhand von Fig. 1 festzustellen, daß diese ebenso wie jeder einzelne Draht 10 in dem zusammengedrückten, flach ausgebreiteten Zustand das Bild einer Wellenwicklung abgibt mit der Besonderheit, daß in der Folge der Wickelköpfe 16, abwechselnd oben und unten, mal der am weitesten rechts liegende Draht 10 die anderen Drähte überkreuzt, das nächste Mal der am weitesten links liegende Draht 10. Generell gilt, daß bei Betrachtung eines Durchgangs der Gruppe von sechs Drähten 10 durch das Statorblechpaket bei den sich an das eine Ende der Stege 14 anschließenden Wickelköpfen, mit Bezug auf Fig. 1 von links nach rechts jeder Wickelkopf 16 den vorhergehenden radial außen überkreuzt, während es am anderen Ende der Stege 14 umgekehrt ist.

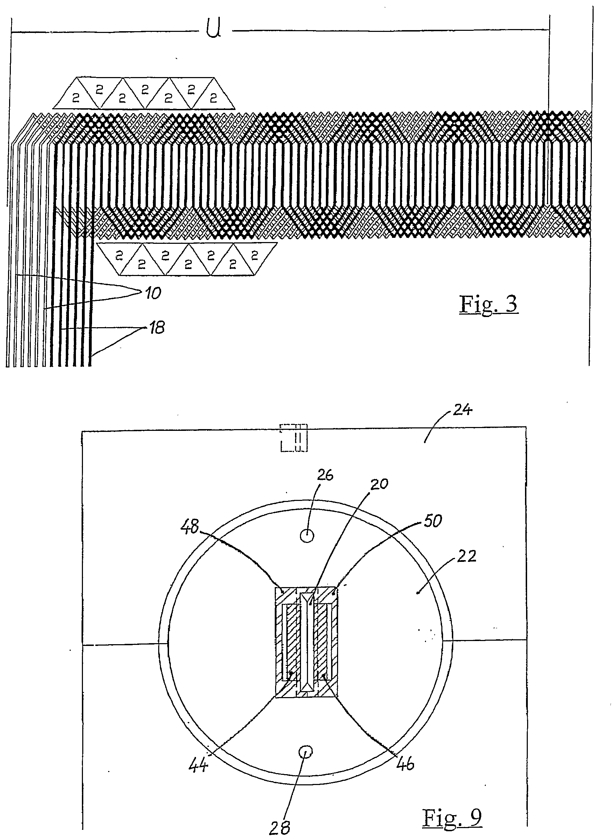

Fig. 1 zeigt nur einen Teil der gesamten Wicklung, die zweimal um den Umfang des Stators reicht. Fig. 2 zeigt eine unabhängig von der ersten aus weiteren sechs Drähten erzeugte, ebensolche, nicht erfindungsgemäße Wicklung. Insgesamt reicht auch diese zweimal um den Umfang des Stators. So, wie die beiden Wicklungen gemäß Fig. 1 und 2 übereinander gezeigt sind, nämlich um sechs Nuten am Umfang versetzt, werden sie auch nacheinander in die Nuten desselben Stators eingeführt. Fig. 3 zeigt im flach ausgebreiteten Zustand die beiden, nicht erfindungsgemäß übereinandergelegten Wicklungen nach Fig. 1 und 2, wobei zur Unterscheidung die mit 18 bezeichneten sechs Drähte der Wicklung nach Fig. 2 schwarz dargestellt sind. Man erkennt, daß nunmehr im Bereich der Wickelköpfe 16 in allen dreieckigen Segmenten durchgehend ein zweilagiger Drahtaufbau vorhanden ist. Das bedeutet mit anderen Worten, daß die Drahtkreuzungen ganz gleichmäßig, also optimal, über den gesamten Umfang des Stators verteilt sind. Der zweilagige Drahtaufbau im Bereich der Wickelköpfe 16 stimmt überein mit der Zahl der Drähte in jeder Nut. Wenn die Statornuten so schmal sind, daß darin die Drähte in nur einer radialen Reihe liegen, ist die Zahl der Drahtlagen in den Nuten gleich der Zahl der Drahtlagen im Bereich der Wickelköpfe. Vorgezogen wird allerdings eine Ausführung des Stators, bei der die Nuten so breit sind, daß die Drähte darin in zwei dicht gedrängt aneinander liegenden, radialen Reihen angeordnet sind.

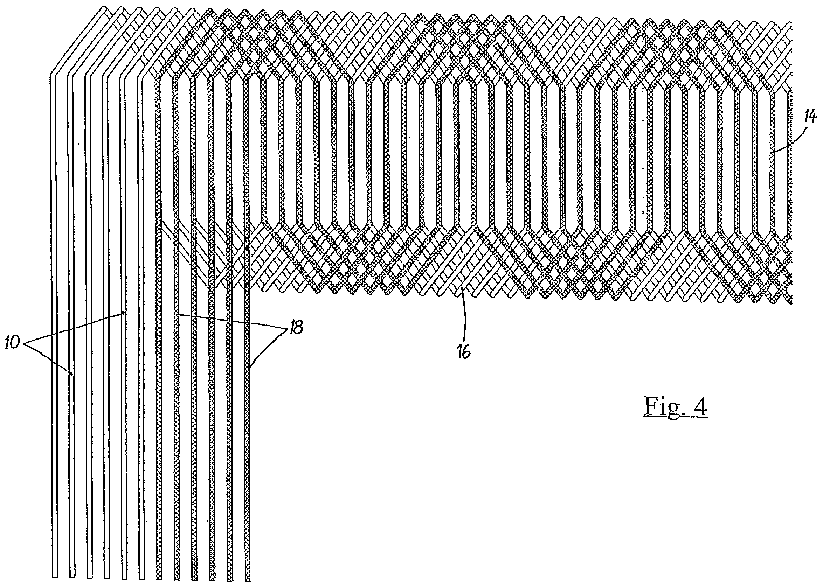

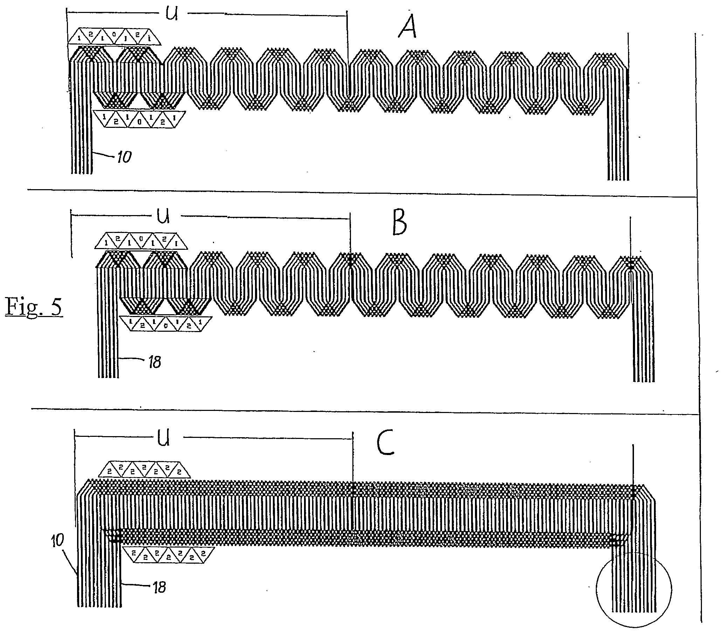

Besonders gut ist die gleichmäßige Verteilung der Wickelköpfe 16 in Fig. 4 zu erkennen, die eine Vergrößerung des Anfangs der Wicklung nach Fig. 3 zeigt. Fig. 5A, B, C zeigen die nicht erfindungsgemäßen Wicklungen nach Fig. 1, 2 und 3 jeweils in ganzer Länge. Dabei besteht die Möglichkeit, die insgesamt zwölf Drahtenden am rechten Ende der zusammengesetzten nicht erfindungsgemäßen Wicklung nach Fig. 5C derart miteinander zu verbinden, daß jeweils in beiden in einer Statornut liegenden Drähten der Strom in dieselbe Richtung fließt. Da außerdem die beiden in einer Nut liegenden Drähte an jedem Ende zwei nach entgegengesetzten Seiten abgewinkelte Wickelköpfe bilden, handelt es sich um eine sogenannte verteilte Wicklung. Außerdem ist diese Wicklung unter Berücksichtigung ihrer Erzeugung auf einer drehbaren Schablone eine Schleifenwicklung mit der Besonderheit, daß ihre Spulenwindungen (Schleifen) axial auseinander gezogen und durch Flachdrücken insgesamt zu einer Wellenwicklung verformt werden.

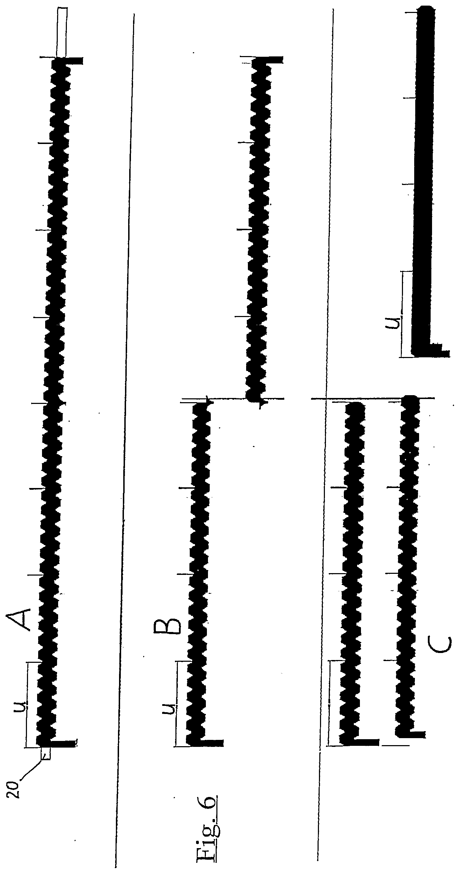

Die in Fig. 6A gezeigte Wicklung entspricht der nach Fig. 1, ist jedoch so lang, daß sie achtmal um den Umfang des Statorblechpakets reicht, in das sie eingeführt werden soll. Fig. 6B, C zeigen nun eine weitere Möglichkeit, um aus der einlagigen Wicklung nach Fig. 6A eine verteilte Wicklung herzustellen. Zu diesem Zweck wird die Wicklung nach Fig. 6A neben ihrer Mitte gegen sich selbst umgefaltet und mit dem in Fig. 6C gezeigten Versatz der beiden Wicklungshälften flach übereinander gelegt, wobei anders, als in Fig. 6B, C gezeigt, die Drähte der langen Wicklung nach Fig. 6A beim Umfalten nicht durchtrennt werden. Mit dem in Fig. 6C gezeigten Versatz ergeben die beiden ohne Drahtunterbrechung übereinander gelegten Wicklungshälften auch wieder eine verteilte Wicklung, wie im Zusammenhang mit Fig. 5C beschrieben. Diese zusammengefügte Wicklung ist auf der rechten Seite der Fig. 6C gezeigt. Da ihre Länge nunmehr viermal um den Statorumfang reicht und die Wicklung durch das Zusammenfalten zweilagig ist, sind jeweils acht Stege 14 in jede Statornut einzuführen. Es versteht sich, daß die vorstehend beschriebene Art der Wicklung nicht auf eine bestimmte Anzahl paralleler Drähte festgelegt ist. Es könnten auch mehr oder weniger als die sechs gezeigten parallelen Drähte benutzt werden. Auch die Zahl der Statornuten spielt im praktisch vorkommenden Rahmen keine Rolle. Im Gegenteil, weil bei der vorgeschlagenen Wicklung die Wickelköpfe einen optimal kleinen Raum einnehmen, eignet sich die neue Wicklung auch für Anwendungsfälle, für die andere, herkömmliche Wicklungen nicht in Frage kommen.

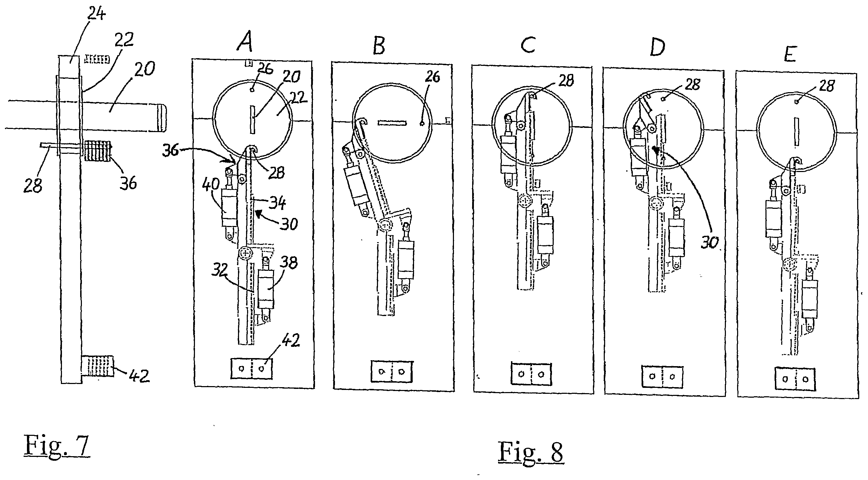

In den Figuren 7, 8A-E und 9 ist eine einfache Wickelvorrichtung zur Erzeugung der Wicklungen nach Fig. 1 bis 6 gezeigt. Wesentliches Teil der Wickelvorrichtung ist eine schmale, leistenförmige Schablone 20, die zusammen mit einer sie tragenden Scheibe 22 in einem Gehäuse 24 drehbar gelagert ist. Die Schablone 20 hat eine Dicke von nur wenigen Millimetern, typischerweise weniger als 1 cm und in der Hochkantstellung nach Fig. 8A eine Höhe entsprechend der Länge der herzustellenden Stege 14. Im dargestellten Ausführungsbeispiel ist die leistenförmige Schablone 20 durch die Scheibe 22 und das Gehäuse 24 hindurch in Längsrichtung schrittweise mit Bezug auf Fig. 7 nach rechts vorschiebbar. Weiterhin sind in der Scheibe 22 mit radialem Zwischenabstand zu den Schmalseiten der Schablone 20 zwei Bolzen 26 und 28 gelagert, die phasenweise axial nach außen vorgeschoben und in die Scheibe 22 zurückgezogen werden können. Sie bilden Formkörper für die Wickelköpfe 16 der herzustellenden Wicklungen.

Darüber hinaus verfügt die gezeigte Vorrichtung über einen insgesamt mit 30 bezeichneten Drahtführer. Er setzt sich zusammen aus zwei unteren, gelenkig miteinander verbundenen Führungsteilen 32, 34 und einem oberen, als Kamm zu bezeichnenden Führungsteil 36. Das Führungsteil 34 ist relativ zum Führungsteil 32 mittels eines Kraftzylinders 38 verschwenkbar, und der Kamm 36 ist relativ zum Führungsteil 34 mittels eines Kraftzylinders 40 verschwenkbar.

Die z. B. sechs dem Drahtführer 32, 34, 36 zugeführten Drähte laufen vorher durch eine Drahtklemme 42, welche im geschlossenen Zustand verhindert, daß Draht zur Schablone 20 hin nachgezogen werden kann.

Schließlich gehören zu der Wickelvorrichtung gemäß Fig. 9 vier Führungs- und Bremsbacken, nämlich auf jeder Seite der Schablone 20 eine innere Backe 44 bzw. 46 und eine äußere Backe 48 bzw. 50. Die Backen sind einzeln und gemeinsam längs der leistenförmigen Schablone 20 verfahrbar und außerdem gesteuert gegen die Schablone 20 und die daran anliegenden Drähte andrückbar oder wahlweise von der Schablone 20 abzuheben. In Fig. 9 gestrichelt gezeigte Führungsrillen in den Andruckflächen sämtlicher Backen 44 - 50 nehmen jeweils einen Steg der auf der Schablone 20 zu erzeugenden Wicklung auf, und die Vielzahl der parallel angeordneten Führungsrillen sorgt dafür, daß die auf der Schablone erzeugten Stege ihren vorbestimmten Zwischenabstand beibehalten. Dabei wirken die Führungs- und Bremsbacken auf jeder Seite der Schablone nach Art von Schrittförderern zusammen. Während z. B. die innere Backe 46 die bereits zuvor erzeugten Stege einer Wicklung in der vorgesehenen Lage relativ zueinander hält und führt, kann die äußere Backe 50 von der Schablone 20 abheben, längs der Schablone 20 zur Scheibe 22 hin verfahren und durch erneuten Andruck gegen die Schablone die gerade zuvor auf der Schablone erzeugten sechs Stege ergreifen. Gleichzeitig erfaßt die äußere Backe 50 aber auch wieder die schon zuvor gebildeten Stege. Daher kann anschließend die innere Backe 46 von der Schablone 20 abheben, ebenfalls entlang der Schablone 20 verfahren und dann durch Andruck gegen sie die Stege wieder erfassen und halten. Somit sind die bereits gebildeten Drahtwindungen ununterbrochen gehalten und geführt, auch wenn die auf einer Seite der Schablone angeordneten Führungs- und Bremsbacken 46, 50 bzw. 44, 48 nach weiterer Bildung von Stegen 14 einzeln in Längsrichtung weitergerückt werden müssen.

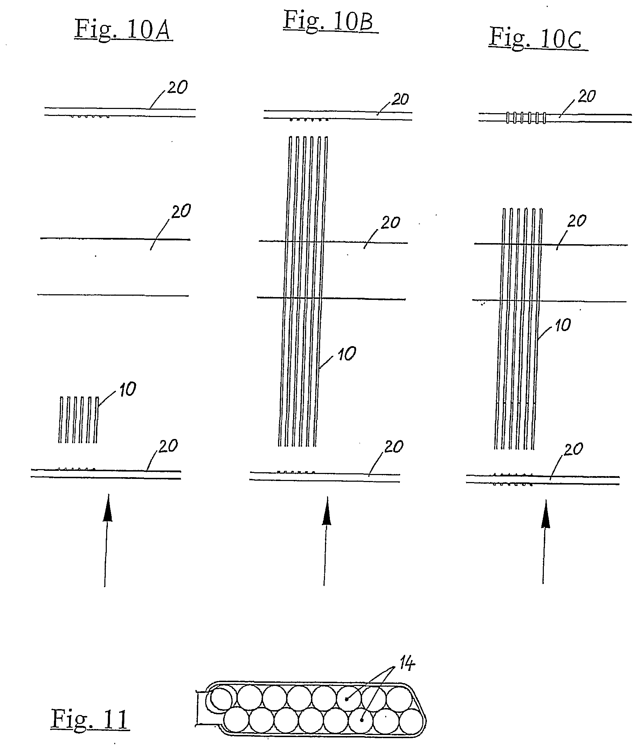

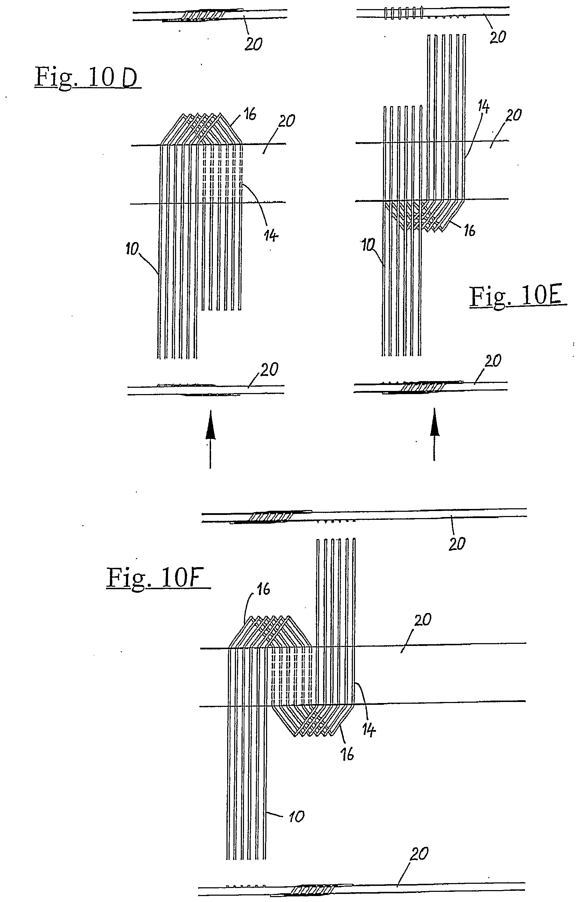

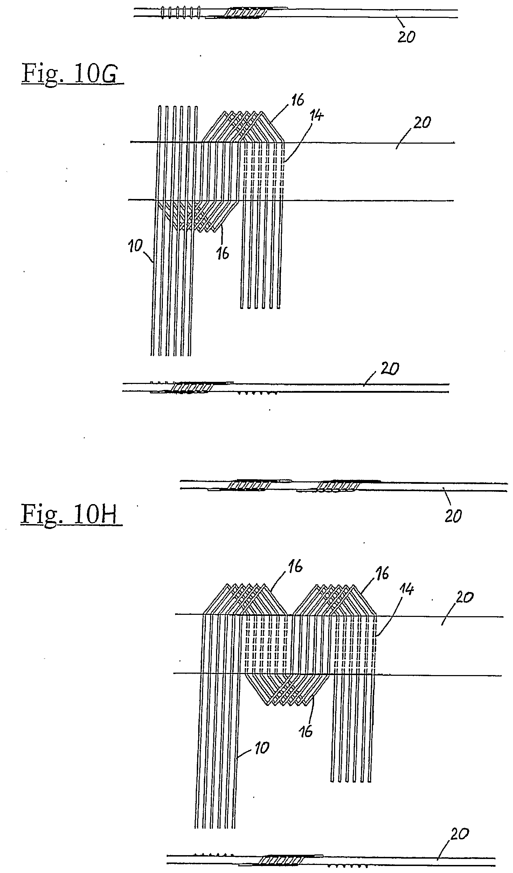

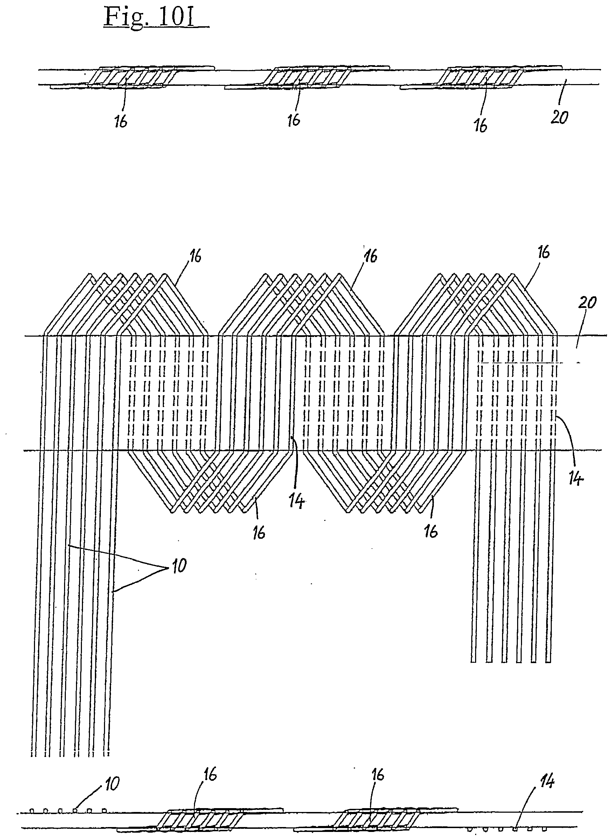

Die Formung einer Wicklung mittels der Vorrichtung nach Fig. 7 - 9 läßt sich anhand der schematischen Darstellungen nach Fig. 10A-I wie folgt beschreiben:
Die beispielhaft gezeigten sechs vorderen Drahtenden werden, von unten kommend, gemäß Fig. 10A durch die Drahtführer 32 und 34 zur Schablone 20 hin vorgeschoben, die in jeder der Ansichten der Fig. 10 in der Mitte in Seitenansicht, darüber in Draufsicht und darunter in einer Ansicht von unten dargestellt ist. In der Stellung nach Fig. 10B sind die sechs Drähte 10 über die Schablone 20 hinaus nach oben vorgeschoben. Der über die Schablone 20 hinausragende Überstand der Drähte 10 bildet später den Anfang 12 der Wicklung. In dieser Stellung werden die vorderen Drahtenden z. B. um den Bolzen 26 nach unten bis zur Anlage an der Rückseite der Schablone 20 gebogen und dort festgelegt, so daß sich die in Fig. 10C gezeigte Situation ergibt. Dabei ist allerdings der Bolzen 26 nicht gezeigt.

Während in der Anfangsphase die Schablone 20 ihre in Fig. 8A gezeigte Ausgangsstellung immer noch beibehält, erfaßt z. B. die äußere Führungs- und Bremsbacke 50 die an der Rückseite der Schablone 20 anliegenden Drahtenden, und dann wird die Schablone 20 zusammen mit der Backe 50 um das sechsfache des Zwischenabstands zwischen den Drähten 10 mit Bezug auf Fig. 10 nach rechts verschoben, während der Drahtführer 32 - 36 die vom Drahtvorrat kommenden Drahtstränge mit Bezug auf die Drehachse der Schablone 20 gegen axiale Verschiebung hält und die Draht-Klemmvorrichtung 42 ein Nachziehen der Drähte zur Schablone 20 hin verhindert. Unmittelbar vor dieser axialen Relativverschiebung des Wicklungsanfangs relativ zum Drahtführer 30 ist allerdings der Bolzen 26 in die Scheibe 22 zurückgezogen worden, so daß die ersten Wickelköpfe 16 gemäß Fig. 10D giebelförmig erzeugt werden und dabei entsprechend der Weite ihrer Spreizung in der Höhe nachgeben können. Fig. 10D läßt gut erkennen, daß die Drähte bei der Spreizung der Wickelköpfe 16 an deren oberer Spitze etwas verdrillt werden. Wegen der wenn auch geringen Dicke der Schablone 20 legen sich die Drähte an den Kreuzungspunkten in zwei Ebenen sauber übereinander.

Im nächsten Schritt hakt sich der Kamm 36 des Drahtführers 30 an dem gemäß Fig. 8A unten befindlichen Führungsbolzen 28 ein und folgt diesem bei seiner Bewegung während einer halben Umdrehung der Scheibe 22 mit der Schablone 20. Bildlich ist diese Bewegung im Übergang von der Stellung nach Fig. 8A zur Stellung nach Fig. 8B und weiter bis zur Stellung nach Fig. 8C dargestellt. Da bei der halben Umdrehung der Schablone ihre in Fig. 8A links befindliche Vorderseite zur Rückseite wird, liegen die zuvor an der Vorderseite anliegenden sechs Drahtstränge nunmehr an ihrer Rückseite an, und von dort erstrecken sich die Drähte über den in Fig. 8C nunmehr oben befindlichen Führungsbolzen zum Drahtführer 30, der nach zwischenzeitlicher Lösung der Drahtklemme 42 während der Drehbewegung der Schablone und jetzt erneuter Klemmung ebenso wie der Führungsbolzen 28 zurückgezogen werden kann. Damit ergibt sich für die zu erzeugenden Wicklung der Zustand nach Fig. 10E.

Im nächsten Arbeitsschritt fährt wieder eine der auf der Rückseite der Schablone 20 befindlichen Führungs- und Klemmbacken, z. B. die Backe 48, mit Bezug auf Fig. 10E nach links, um die gegenüber dem Drahtführer auf der Rückseite der Schablone 20 gebildeten Stege 14 zu ergreifen. Es folgt eine erneute schrittweise axiale Bewegung der Schablone 20 zusammen mit allen die bisher gebildeten Stege 14 haltenden Backen 44 - 50, so daß für die Wicklung der in Fig. 10F dargestellte Zustand mit nunmehr zwei Gruppen von giebelförmig gespreizten Wickelköpfen 16 erreicht wird.

Anschließend wird der Kamm 36 des Drahtführers 30 nach unten zurückgezogen, wo er sich an den dort befindlichen Führungsbolzen 26 anlegt. Es folgt bei gelöster Drahtklemme 42 die nächste halbe Umdrehung der Scheibe 22 mit der Schablone 20 und den daran anliegenden Führungs- und Klemmbacken 44 - 50, wodurch der Zustand der Wicklung nach Fig. 10G erreicht wird. Danach findet abermals der vorstehen beschriebene Vorgang des Ergreifens und Verschiebens der letzten an der Rückseite der Schablone anliegenden Stege 14 statt, während der Drahtführer 30 die ankommenden Drahtstränge axial hält und die Drahtklemme 42 wieder geschlossen ist. So gelangt die Wicklung in den in Fig. 10H gezeigten Zustand. Da sich die Wickelschritte jeweils abwechselnd mit einer halben Umdrehung der Schablone 20 und einer axialen Relatiwerschiebung der auf der Rückseite der Schablone 20 neu gebildeten Stege 14 in jeweils gleicher Weise wiederholen, ist in Fig. 10I nur noch ein weiterer Zwischenzustand der erzeugten Wicklung in größerem Maßstab gezeigt. Die Wicklung wächst auf diese Weise auf die gewünschte Anzahl Stege entsprechend der Anzahl der zu belegenden Statornuten oder ein mehrfaches davon.

Eine verteilte Wicklung kann auch dadurch erzeugt werden, daß nach Erreichen einer bestimmten Länge einer einfachen Wicklung gemäß Fig. 10A-I mit umgekehrter Drehrichtung und umgekehrter schrittweiser Verschieberichtung der Schablone 20 weitergearbeitet wird.

Wenn eine Wicklung auf der Schablone 20 in der vorgesehenen Länge hergestellt und mittels einer nicht gezeigten Schneidvorrichtung vom Drahtvorrat abgeschnitten worden ist, kann sie mitsamt den Führungs- und Klemmbacken 44 - 50 axial von der Schablone 20 abgestreift werden. Dann wird die Wicklung in der durch die Führungs- und Klemmbacken 44 - 50 aufrecht erhaltenen Ordnung der Stege zusammengedrückt, so daß alle Stege 14 im wesentlichen in einer geraden Ebene liegen, und in dieser Form auf einen ebenfalls leistenförmigen Spulenaufnehmer mit Quernuten im Abstand der Führungsrillen in den Backen 44 - 50 übertragen. Gegebenenfalls kann auch bereits eine der Backen 44 - 50 als Spulenaufnehmer dienen. Wenn mehrere Wicklungen in eine bestimmte relative Anordnung zueinander gebracht und gemeinsam in einen Stator eingeführt werden sollen, können sie zunächst in dem Spulenaufnehmer gesammelt und dann, wie z. B. in Fig. 8 und 9 der deutschen Patentanmeldung 103 28 956.9 gezeigt, in radial außen offene Nuten eines rotorähnlichen Übertragungswerkzeugs überführt werden. Wie ebenfalls in der genannten Patentanmeldung beschrieben, wird das Übertragungswerkzeug anschließend derart in die Statorbohrung eingesetzt, daß die die Wicklung enthaltenden Nuten mit den Statornuten radial in Flucht liegen. Im letzten Schritt werden gemäß Fig. 10 und 11 der Patentanmeldung 103 28 956.9 die Stege der Wicklung bzw. der Wicklungen radial aus den Nuten des Übertragungswerkzeugs in die Statornuten geschoben.

Da bei dem vorgeschlagenem Wickelverfahren sehr kleine Wickelköpfe erzeugt werden, werden auch möglichst kleine Statornutquerschnitte angestrebt. Gemäß Fig. 11 sollten die Statornuten so ausgelegt sein, daß sie bei üblicher radialer Ausrichtung zwischen parallelen Seitenwänden eine Breite haben, die das (1 + cos 30°)fache des Drahtdurchmessers beträgt. In diese Nut passen genau zwei Reihen von runden Drähten, wenn sie optimal eng auf Lücke versetzt liegen. Der Lage der Drähte entsprechend bildet im Ausführungsbeispiel nach Fig. 11 die radial äußere Wand der Statornut mit deren Seitenwänden Winkel von 60° bzw. 120°, wobei die Ecken zweckmäßigerweise mit dem halben Drahtdurchmesser ausgerundet sind.

Der radial innen befindliche Nuteingang braucht nur wenig größer zu sein als ein Drahtdurchmesser, da die Drähte nacheinander in die Nut eingeführt werden können. Auch die Übergänge von den Seitenwänden auf den schmalen Eingangskanal sind entsprechend dem Drahtdurchmesser gerundet und, da die Seitenwände gleich lang sind, wie in Fig. 11 gezeigt, radial versetzt zueinander. Dabei kann die Kontur des Eingangsbereichs so gestaltet werden, daß der letzte in die Nut eingeführte Draht gerade noch, ein wenig um die Ecke, seinen Platz seitlich versetzt zum Nuteingang findet, die anderen Drähte gegen eine Bewegung in Richtung zum Nuteingang blockiert und selbst auch durch die auf ihn vom vorletzten Draht in Schrägrichtung ausgeübte Kraft in Verbindung mit der am Übergang von der Nutbreite auf die Breite des Nuteingangs gebildeten Ecke in der Nut zurückgehalten wird.

## Patentansprüche

1. Stator, wobei in den Nuten die Stege (14) einer einzigen, aus n > 1 durchgängigen Drähten (10, 18) gebildeten, durchgängigen Wellenwicklung liegen, die auf einer leistenförmig flachen Schablone gewickelt worden ist, wobei die Stege (14) beim Wickeln von Backen gehalten sind und zwischen halben Umdrehungen der Schablone jeweils eine axiale Relatiwerschiebung zwischen Stegen (14) erfolgt, zwischen denen ein Wickelkopf giebelförmig erzeugt wird, wobei sich die Wickelschritte jeweils abwechselnd mit einer halben Umdrehung der Schablone (20) und einer axialen Relativverschiebung der Stege (14) in jeweils gleicher Weise wiederholen und wobei die Wicklung auf diese Weise auf die gewünschte Anzahl Stege entsprechend einer mehrfachen Anzahl der zu belegenden Statornuten wächst, und die Wicklung nach dem Abnehmen von der Schablone flach zusammengedrückt worden ist, wobei deren n Drähte bei jedem Durchgang durch das Statorblechpaket jeweils in n in Umfangsrichtung aufeinander folgenden Nuten liegen und sich im Bereich ihrer im wesentlichen giebelförmigen Wickelköpfe (16) an jeweils mit Zwischenabstand angeordneten Kreuzungspunkten derart kreuzen, dass mit Bezug auf eine bestimmte Umfangsrichtung von den n aufeinander folgenden Drähten (10, 18) jeweils der in Umfangsrichtung folgende Draht sich an dem einen Ende des Stators radial außen und an dem anderen Ende des Stators radial innen an dem in Umfangsrichtung davor liegenden Draht vorbei erstreckt und die beiden sich an einen Steg (14) anschließenden Wickelköpfe (16) an einem Ende des Stators jeweils vor und an dessen anderem Ende in Umfangsrichtung hinter dem Steg (14) liegen.

2. Stator nach Anspruch 1, **dadurch gekennzeichnet, dass** die Wicklung als verteilte Wicklung ausgebildet ist, indem in den Nuten mehrere in gleicher Richtung stromdurchfiossene Stege (14) liegen, von denen an jedem Ende des Stators ein Teil der Wickelköpfe (16) in die eine Umfangsrichtung und der übrige Teil der Wickelköpfe (16) in die andere Umfangsrichtung abgebogen ist.

3. Stator nach Anspruch 2, **dadurch gekennzeichnet, dass** die Stator- oder Rotornuten zwischen parallelen Seitenwänden eine Breite haben, die das 1,866-fache des Drahtdurchmessers beträgt, und die radial äußere Nutwand mit den beiden Seitenwänden Ecken mit Winkeln von 60° und 120° bildet.

4. Stator nach einem der vorhergehenden Ansprüche, **dadurch gekennzeichnet, dass** die Wellenwicklung zweifach, vierfach, achtfach oder geradzahlig mehrfach um den Umfang des Stators reicht.

## Claims

1. Stator, wherein the fillets (14) of a single continuous wave winding, formed by n>1 continuous wires (10, 18), are located in the slots, which wave winding has been wound onto a strip-like flat template, wherein the fillets (14) are held by jaws during the winding and between half rotations of the template there is an axial relative displacement between fillets (14) between which a gable-shaped winding head is formed, wherein the winding steps are repeated in the same manner alternately with a half rotation of the template (20) and an axial relative displacement of the fillets (14) and wherein the winding in this way grows to the desired number of fillets corresponding to a multiple number of stator slots to be occupied, and the winding has been pressed down flat after removal from the template, wherein its n wires with each passage through the stator lamination package are located in n slots which are consecutive in circumferential direction and cross one another in the region of their essentially gable-shaped winding heads (16) at crossing points arranged with clearance respectively, such that with respect to an specified circumferential direction of the n consecutive wires (10, 18) the following wire in circumferential direction extends radially outwardly at one end of the stator and at the other end of the stator extends radially inwardly past the preceding wire in circumferential direction and the two winding heads (16) adjoining a fillet (14) are positioned at one end of the stator in front of the fillet and at its other end in circumferential direction behind the fillet (14).

2. Stator according to claim 1, **characterised in that** the winding is designed as a distributed winding **in that** a plurality of fillets (14), through which current flows in the same direction, are located in the slots, of which fillets at each end of the stator a portion of the winding heads (16) are bent in one circumferential direction and the remaining portion of the winding heads (16) are bent in the other circumferential direction.

3. Stator according to claim 2, **characterised in that** the stator or rotor slots have a width between parallel side walls which is 1.866 times the wire diameter, and the radially outer slot wall forms corners with angles of 60° and 120° with the two side walls.

4. Stator according to any of the preceding claims, **characterised in that** the wave winding extends twice, four times, eight times or an even multiple of times around the circumference of the stator.

## Revendications

1. Stator, dans lequel les nervures (14) d'un seul enroulement ondulé continu, formé de n > 1 fils (10, 18) continus, se situent dans les rainures, qui a été enroulé sur un gabarit plat en forme de barre, dans lequel les nervures (14), lors de l'enroulement, sont retenues par des mâchoires et respectivement un déplacement relatif axial entre des nervures (14) s'effectue entre des demi-tours du gabarit, entre lesquelles une tête de bobine est produite en forme de pignon, dans lequel les étapes d'enroulement se répètent respectivement de la même façon respectivement alternativement avec un demi-tour du gabarit (20) et un déplacement relatif axial des nervures (14) et dans lequel l'enroulement croît de cette façon jusqu'au nombre souhaité de nervures correspondant à un nombre multiple des rainures de stator à garnir, et l'enroulement a été aplati après le retrait du gabarit, dans lequel ses n fils se situent à chaque passage à travers l'empilage de tôles de stator respectivement dans n rainures consécutives dans la direction périphérique et se croisent dans la zone de leurs têtes de bobine (16) sensiblement en forme de pignon en des points de croisement disposés respectivement avec un écart intermédiaire, de telle sorte que, par rapport à une direction périphérique définie, parmi les n fils (10, 18) consécutifs, respectivement le fil suivant dans la direction périphérique s'étend à l'une des extrémités du stator radialement à l'extérieur et à l'autre extrémité du stator radialement à l'intérieur le long du fil situé devant dans la direction périphérique et les deux têtes de bobine (16) se raccordant à une nervure (14) se situent à une extrémité du stator respectivement devant et à l'autre extrémité de celui-ci dans la direction périphérique derrière la nervure (14).

2. Stator selon la revendication 1, **caractérisé en ce que** l'enroulement est réalisé en tant qu'enroulement réparti, du fait que plusieurs nervures (14) traversées par un courant dans la même direction, parmi lesquelles à chaque extrémité du stator une partie des têtes de bobine (16) est pliée dans une des directions périphériques et la partie restante des têtes de bobine (16) est pliée dans l'autre direction périphérique, se situent dans les rainures.

3. Stator selon la revendication 2, **caractérisé en ce que** les rainures de stator ou de rotor présentent entre des parois latérales parallèles une largeur qui atteint 1,866 fois le diamètre de fil, et la paroi de rainure radialement extérieure forme avec les deux parois latérales des coins avec des angles de 60° et 120°.

4. Stator selon l'une quelconque des revendications précédentes, **caractérisé en ce que** l'enroulement ondulé passe deux fois, quatre fois, huit fois ou un multiple pair de fois autour de la périphérie du stator.
